# EUROPÄISCHE PATENTSCHRIFT

(11) **EP 0 893 952 B1**
(45) Veröffentlichungstag und Bekanntmachung des Hinweises auf die Patenterteilung: **28.08.2002**
(21) Anmeldenummer: 97921716.3
(22) Anmeldetag: 23.04.1997
(51) Int. Cl.: A21C 15/00

(54) **VERFAHREN ZUM AUFBRINGEN EINES BELAGES AUF EIN BROT**
PROCESS FOR SPREADING A FILLING ON BREAD
PROCEDE PERMETTANT D'APPLIQUER UNE GARNITURE SUR DU PAIN

(30) Priorität: 25.04.1996 DE 19616414
(43) Veröffentlichungstag der Anmeldung: 03.02.1999
(73) Patentinhaber: Letsch, Klaus-Peter, 72270 Beiersbronn (DE)
(72) Erfinder: Letsch, Klaus-Peter, 72270 Beiersbronn (DE)
(74) Vertreter: Weiss, Peter, Dr. rer. nat.
(86) Internationale Anmeldenummer: EP9702063
(87) Internationale Veröffentlichungsnummer: WO97040693

(56) Entgegenhaltungen:
- EP-A- 0 612 476
- DE-A- 4 117 093

## Beschreibung

Die Erfindung betrifft ein Verfahren zum Aufbringen eines Belages auf ein Brot, insbesondere ein Baguette, sowie eine Vorrichtung zum Durchführen des Verfahrens.

Es ist bekannt, dass Baguettes mit einem Belag versehen werden, welcher aus unterschiedlichsten essbaren Lebensmitteln bestehen kann. Bspw. werden Beguettes mit Sossen, Tomaten, Käse, Schinken und dgl. belegt und anschliessend in einem Ofen überbacken.

Dazu ist erforderlich, dass das Baguette aufgeschnitten, belegt und überbacken wird. Dieser Vorgang muss, damit die Lebensmittel auf dem Baguette nicht verderben, immer kurz vor dem Konsumieren geschehen. Nachteilig daran ist, dass das Zubereiten eines belegten Baguettes sehr zeit- und damit kostenintensiv ist.

Ferner können solche Baguettes nicht lange im belegten Zustand aufbewahrt werden, da in der Regel der Belag das Baguette aufweicht und zudem schnell verdirbt.

Gerade im Gastronomie- und Imbissbereich sind derartige belegte und überbackene Baguettes sehr beliebt und werden als Zwischenmahlzeit oft gegessen.

Nachteilig ist auch, dass beim Essen der Belag des öfteren aus dem Baguette austritt und ggf. die Kleidung beschmutzt, was unerwünscht ist.

Aus der EP-A-612 476 ist ein Verfahren zum Herstellen eines Sandwiches kurz vor dem Verzehr bekannt. Hierbei wird in ein nichtaufgeschnittenes Brot mittels einer in das Brot eindringenden Halbschale ein an seinen Vorderenden bereits geöffneter Beutel eingeführt, der dann an seinem hinteren Ende aus dem Brot und aus der Halbschale herausgezogen wird, wobei der Beutelinhalt durch eine Einschnürung vor dem hinteren Ende herausgedrückt wird.

Der vorliegenden Erfindung liegt die Aufgabe zugrunde, ein Verfahren sowie eine Vorrichtung zum Durchführen des Verfahrens zu schaffen, welches schnell, frisch und leicht zuzubereiten und kostengünstig herzustellen ist. Es sollen ferner Lagerungsmöglichkeiten und Handhabbarkeit beim Essen eines solchen Baguettes verbessert werden.

Zur Lösung dieser Aufgabe führt, dass das Brot in zumindest zwei Hälften aufgeschnitten wird, zwischen die zwei Hälften des Brotes ein mit einem Belag, Aufstrich od. dgl. gefüllter Beutel eingelegt und vor dem Verzehr des Brotes einends zumindest teilweise geöffnet wird, wonach andernends der Beutel ergriffen und aus dem Brot herausgezogen wird, wobei gleichzeitig durch Einschnüren des Beutels der Belag auf das Brot aufgebracht wird.

Das vorliegende Verfahren gestattet, dass ein essbarer Belag gleichmässig verteilt auf das Baguette aufgebracht wird, indem der Beutel, welcher zwischen zwei Hälften in das Baguette eingelegt ist, einerseits geöffnet und andererseits aus dem Baguette herausgezogen wird. Dabei schnüren zwei Elemente eine obere und untere Seite des Beutels ein, beaufschlagen diese ggf. mit Druck, so dass der in den Beutel eingefüllte Belag an der geöffneten Seite austritt und sich während des Herausziehens gleichmäßig auf das Baguette verteilt.

Dabei werden die Elemente, welche den Beutel zusammendrücken, festgehalten, und nur der nur Beutel ansich wird mittels einer Lasche aus dem Baguette herausbewegt.

Der Belag ist bevorzugt pastös, kann aus verschiedensten Soßen, aber auch aus Lebensmittelteilchen, wie Käse, Schinken od. dgl., bestehen.

Denkbar ist allerdings auch, daß durch Zusammendrücken bzw. Einschnüren des Beutels mittels Fingern einer menschlichen Hand und durch Ziehen mit der anderen Hand der Beutel aus dem Baguette herausgezogen werden kann, während sich der Belag dann gleichmäßig verteilt auf das Baguette bzw. zwischen die Hälften des Baguettes aufbringen läßt. Anschließend kann das Baguette beispielsweise in einem Backofen erhitzt und danach gegessen werden.

Die Elemente, welche den Beutel zusammendrücken, können unterschiedlichster Art sein. Beispielsweise können zwei Metall- oder Kunststoffbügel federartig gegeneinander mit Druck beaufschlagbar sein. Wichtig ist, daß die dem Beutel zugewandten Flächen ggfs. abgerundet bzw. kantenfrei sind, um ein Verletzen des Beutels beim Durchziehen zu vermeiden. Deshalb können beispielsweise auch zwei runde oder halbrunde Stäbe verwendet werden, die gegeneinander mit Druck beaufschlagbar sind oder nur einen Spalt zum Einschnüren des Beutels bilden.

In einem weiteren Ausführungsbeispiel der vorliegenden Erfindung ist das Baguette mit Beutel und darin enthaltenem Belag in einen Behälter eingesetzt. Die beidseitigen Laschen des Beutels sind durch in Stirnwänden des Behälters angeordnete Schlitze geführt.

Der Behälter kann dabei stirnseitig und/oder über Seitenwände geöffnet werden. Dieser hat bevorzugt eine rechteckartige querschnittliche Grundform.

Die Schlitze, welche in den Stirnwänden der Behälter eingeformt sind, dienen dazu, um den Beutel beim Herausziehen einzuschnüren. So kann nach dem Öffnen, beispielsweise mittels Schere oder Abreißperforierung, ein Belag des Beutels gleichmäßig auf das Baguette aufgetragen werden. Auch hier verbleiben keine Rückstände an Belag im Beutel. Dieser kann anschließend beinahe rückstandsfrei entsorgt werden.

Im Rahmen der vorliegenden Erfindung soll auch liegen, daß der Beutel leicht aufgerissen bzw. an einer scharfen Kante einer Stirnwand zum Öffnen abgerissen werden kann. Nach Aufbringen des Belages kann der Behälter geöffnet, das Baguette entnommen und im Ofen zubereitet werden.

Um das frischgebackene Baguette eine gewisse Zeit lang warmzuhalten und ggfs. zu transportieren, kann dieses direkt aus dem Ofen wieder in den Behälter eingelegt werden.

Da der Behälter bevorzugt aus lebensmittelgerechten und wärmeisolierenden Materialien besteht, kann das frischgebackene Baguette lange warmgehalten werden.

In einem weiteren Ausführungsbeispiel der vorliegenden Erfindung ist daran gedacht, zusätzlich den Behälter mit einem Stempel zu versehen, welcher über einen Schieber das frischgebackene Baguette aus dem Behälter stirnwärts herausschiebt, wodurch es aus dem Behälter herausragt und dort unmittelbar abgebissen werden kann. Das Herausschieben des Behälters erfolgt mittels des Schiebers, welcher aus dem entleerten Beutel geformt wird.

Dieser weist bevorzugt zwei Faltlinien auf, damit er zu einem "U" geformt werden kann. Der gefaltete Beutel wird dann durch entsprechende Führungsschlitze und den Schlitz der Stirnwand in den Behälter eingeführt und trifft anschließend auf den Stempel, welcher das im Behälter liegende Baguette durch die gegenüberliegende und dann geöffnete Stirnwand herausschiebt.

Diese Verpackung ermöglicht ein sehr sauberes Essen, ohne daß Teile des Belages danebentropfen und ggfs. die Kleidung beschmutzen.

Sofern nicht das gesamte Baguette gegessen werden möchte, kann der Behälter wieder stirnseitig verschlossen werden und das übrige Baguette später verzehrt werden.

Wichtig ist jedoch, daß der Belag sehr schnell und unmittelbar vor dem Verzehr auf das frische Baguette aufgebracht wird, anschließend das Baguette im Ofen überbacken und gleich danach verzehrt werden kann. Deshalb ist gerade für die Gastronomie von großer Bedeutung, daß die Zubereitung des Baguettes sehr schnell erfolgt. Auch können eine große Vielzahl an unterschiedlichen Baguettes mit unterschiedlichen Belägen bzw. Beutel unterschiedlichster Füllungen angeboten werden.

Vor allem sind auch die außerordentlichen Vorteile aus hygienischer Sicht zu erwähnen. Der Belag kommt frisch aus dem Beutel und direkt auf das Brot, ohne daß er mit anderen Gegenständen oder Händen in Berührung kommt. Im Beutel selbst kann er ohne Schwierigkeiten keimfrei gehalten werden.

Auch ist daran gedacht, dem Behälter eine Serviette beizufügen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Draufsicht auf ein erfindungsgemäßes Baguette mit Vorrichtung zum Aufbringen eines kontinuierlichen Belages;
Figur 2 eine Draufsicht auf ein weiteres Ausführungsbeispiel des Baguettes gemäß Figur 1;
Figur 3 einen schematisch dargestellten Längsschnitt durch eine Vorrichtung zum Lagern und/oder Aufbringen eines Belages in das Baguette;
Figur 4 einen schematischen Querschnitt durch ein weiteres Ausführungsbeispiel der Vorrichtung gemäß Figur 3;
Figur 5 eine Draufsicht auf einen Beutel zur Aufnahme eines Belages mit Faltlinien;
Figur 6 eine Seitenansicht der Vorrichtung gemäß Figur 4;
Figur 7 eine Seitenansicht auf ein weiteres Ausführungsbeispiel der Vorrichtung gemäß Figur 6.

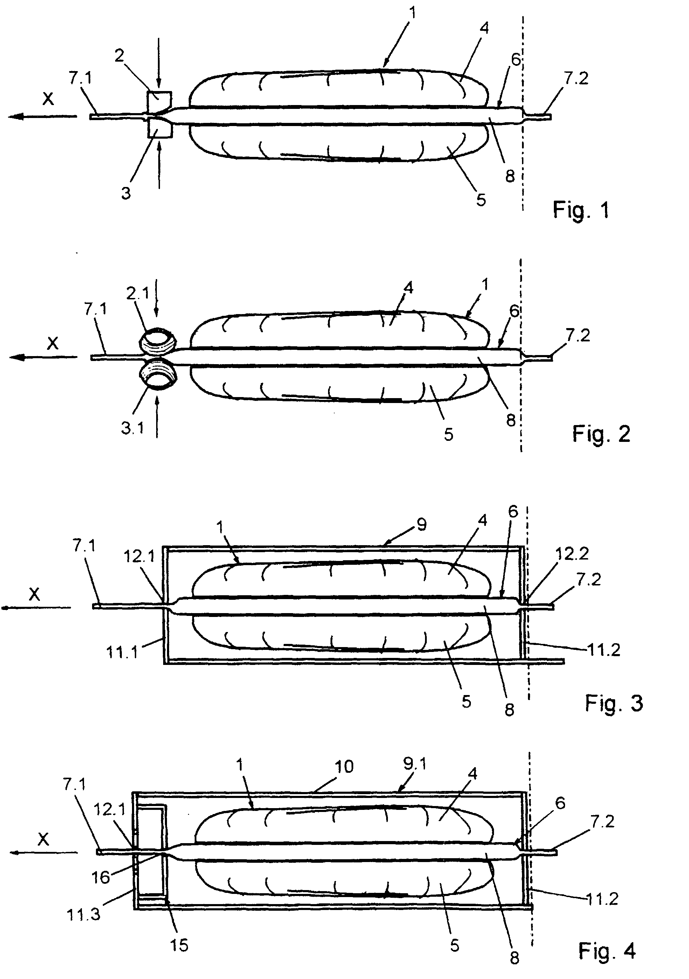

Gemäß Figur 1 ist ein Baguette 1 bevorzugt in Längsrichtung und mittig aufgeschnitten. Dabei ist das Baguette 1 zumindest in zwei Hälften 4, 5 geteilt, wobei die Hälfte 4 die obere und die Hälfte 5 die untere ist.

Zwischen diese Hälften 4, 5 ist ein Beutel 6 in das Baguette 1 eingelegt. Dieser Beutel 6 ist beidends mit Laschen 7.1, 7.2 versehen, welche aus dem Baguette 1 herausragen. Der Beutel 6 ist geringfügig länger als das Baguette 1 ausgebildet, jedoch kann er von gleicher Breite sein.

Der Beutel 6 ist mit einem Belag 8 gleichmäßig gefüllt, welcher darin haltbar verpackt ist. Der Belag 8 besteht aus einer bevorzugt pastösen Zusammensetzung eßbarer Lebensmittel, deren Zusammensetzung variieren kann. Der Beutel 6 kann beispielsweise Zusammensetzungen enthalten, die als Aufstrich für ein Baguette 1 insbesondere zum Überbacken geeignet sind. Beispielsweise kann er Senf, Ketchup, Käse, Schinken, Gewürze od. dgl. enthalten.

Damit das Baguette 1 frisch zubereitet werden kann, wird die Lasche 7.2 beispielsweise mittels einer Schere od. dgl. geöffnet, wie es in Figur 1 gestrichelt angedeutet ist. Das Öffnen des Beutels 6 kann auch auf andere Weise erfolgen, beispielswiese durch Aufreißen oder Abreißen der Lasche 7.2.

Anschließend wird, wie durch Pfeilrichtung X dargestellt, durch Ziehen an der Lasche 7.1 der Beutel 6 langsam aus dem Baguette 1 herausgezogen. Gleichzeitig wird mittels Elementen 2, 3 nahe der Lasche 7.1 und nahe dem Baguette 1 der Beutel 6 beidseitig von oben und unten mit Druck beaufschlagt. Dadurch wird der Belag 8 beim Herausziehen des Beutels 6 gleichmäßig über die gesamte Fläche innen zwischen den Hälften 4, 5 auf das Baguette 1 aufgebracht.

Anschließend kann das Baguette 1 in einem Ofen überbacken werden. Ein wesentlicher Vorteil ist, daß die Hälften 4, 5 des Bagettes 1 durch den Belag 8 innen nicht aufweichen. Das Aufbringen des Belages an sich erfordert keine Hilfsmittel, wie beispielsweise Löffel, Messer od. dgl., so daß das Baguette 1 sehr schnell zubereitet werden kann.

Ein weiterer Vorteil der vorliegenden Erfindung ist, daß die Elemente 2, 3, zwischen welchen der Beutel 6 durchgeführt wird, diesen ausreichend, wie in Pfeilrichtung dargestellt, mit Druck beaufschagen, so daß keine Rückstände an Belag 8 im Beutel 6 verbleiben. Anschließend kann der Beutel, welcher völlig frei von Belagsrückständen ist, recycelt werden.

Anstelle der Elemente 2 und 3 können auch zwei Finger 2.1, 3.1 einer menschlichen Hand den Beutel 6 einschnüren, um den Belag 8 gleichmäßig auf das Baguette 1 aufzubringen, wie es in Figur 2 dargestellt ist. Wichtig ist, daß beim Herausziehen des Beutels 6 aus dem Baguette 1 die Elemente 2, 3 so wenig wei möglich bewegt werden.

Ein Vorteil der vorliegenden Erfindung ist, daß das Baguette 1 mit eingelegtem Beutel 6 beispielsweise in einer Folie verpackt, frischgehalten werden kann, bis es zubereitet bzw. verzehrt wird.

In Figur 3 ist ein Behälter 9 dargestellt, welcher zur Verpackung des Baguettes, zum Aufbewahren eines erwärmten bzw. überbackenen Baguettes und auch als Vorrichtung zum Aufbringen des Belages 8 auf das Baguette 1, sowie als Eßhilfe dient. Dabei besteht er aus Wänden, welche einen rechteckartigen Körper bilden. Stirnseitig ist der Behälter 9 von Stirnwänden 11.1, 11.2 verschlossen. Diese weisen jeweils bevorzugt mittig einen horizontalen länglich ausgebildeten Schlitz 12.1, 12.2 auf.

Die Funktionsweise dieses Behälters 9 ist folgende:

In diesen Behälter 9 wird das aufgeschnittene, in zwei Hälften 4, 5 geteilte Baguette 1 zusammen mit dem Beutel 6 eingelegt. Dies kann durch eine der Wände des Behälters 9 geschehen, wobei die entsprechende Wand aufgeklappt wird. Die Laschen 7.1, 7.2 werden durch die Schlitze 12.1, 12.2 der Stirnwände 11.1, 11.2 geführt. Dies geschieht schon bei dem Einbringen von Baguette 1 mit Beutel 6 in den Behälter 9. Der Konsument braucht zum Vorbereiten des Baguettes 1 nur den Beutel 6 im Bereich der Lasche 7.2 öffnen. Durch anschließendes Ziehen der Lasche 7.1 in X-Richtung verteilt sich der Belag 8 gleichmäßig auf dem Baguette. Anschließend wird das Baguette 1 aus dem Behälter 9 zum Überbacken entnommen. Das Baguette 1 kann dann gegessen oder zum warmhaltenden Aufbewahren wieder in den Behälter 9 gelegt werden. Da der Behälter 9 bevorzugt aus wärmeisolierenden Materialien hergestellt ist, hält der das gebackene Baguette 1 eine gewisse Zeit warm und frisch.

In einem weiteren Ausführungsbeispiel der Erfindung gemäß Figur 4 ist ein Behälter 9.1 gezeigt, welchem innen, nahe einer Stirnwand 11.3, ein Stempel 15 bewegbar zugeordnet ist. Dieser Stempel 15 ist ebenfalls, wie die Stirnwände 11.2, 11.3, mit einer schlitzartigen Öffnung 16 versehen, um die Lasche 7.1 des Beutels 6 aufzunehmen.

Mit diesem Behälter 9.1 kann in oben beschriebener Weise der Beutel 6, durch Öffnen der Lasche 7.2 und durch Ziehen an der Lasche 7.1 in dargestellter X-Richtung aus dem Baguette 1 bzw. Behälter 9.1 entfernt werden. Dabei wird durch den Schlitz 12.1 aber auch durch die schlitzartige Öffnung 16 des Stempels 15 der Beutel 6 so zusammengedrückt, daß der Belag gleichmäßig verteilt, wie oben beschrieben, auf das Baguette 1 bzw. zwischen die Hälften 4, 5 aufgebracht wird.

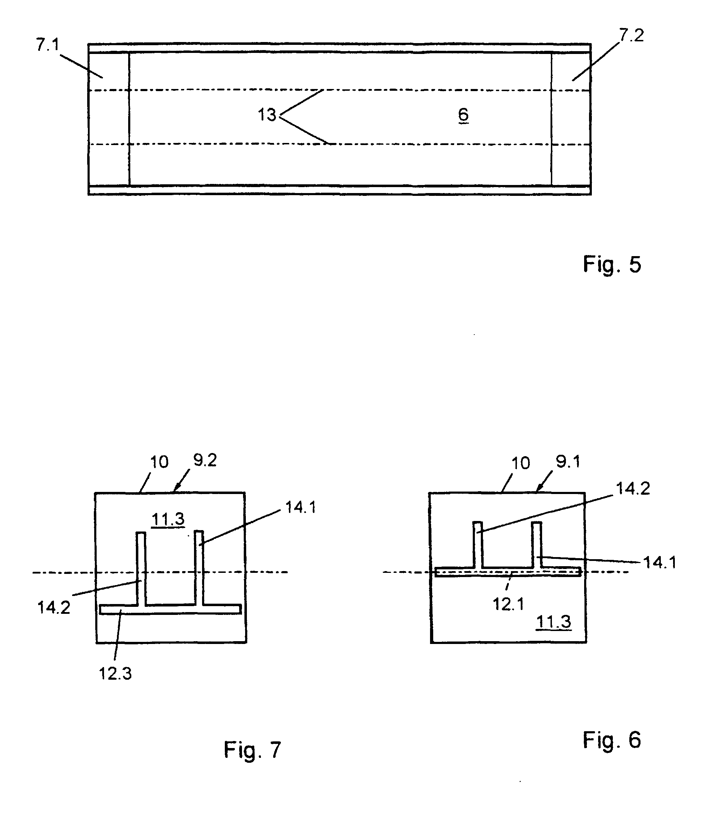

Anschließend wird der entleerte Beutel 6, welcher bevorzugt mit zwei länglichen Faltlinien 13 (Figur 5) versehen ist, U-förmig gefaltet und von außen durch entsprechende Führungsschlitze 14.1, 14.2 (siehe Figur 6) und durch den Schlitz 12.1 geführt. Er trifft dabei auf den Stempel 15, welcher das Baguette 1 durch Nachschieben des gefalteten Beutels 6 aus dem Behälter 9.1 schiebt, wenn die Stirnwand 11.2 geöffnet ist. Das Baguette 1 kann stückchenweise gegessen werden. Ein Essen eines solchen Baguettes 1 ist erleichtert, da kein Belag 8 seitlich aus dem Baguette 1 nach außen heraustreten oder ggfs. heraustropfen kann.

In einem weiteren Ausführungsbeispiel gemäß Figur 7 ist ein Behälter 9.2 gezeigt, welcher in der Stirnwand 11.3 einen unterhalb der Mitte angeordneten Schlitz 12.3 mit davon senkrecht abkragenden, zueinander beabstandeten Führungsschlitzen 14.1, 14.2 aufweist. Auch hier kann ein entsprechend U-förmig gefalteter Beutel 6 durch diese Führungsschlitze 14.1 bzw. 14.2 und dem dazwischenliegenden Schlitzbereich 12.3 geführt werden, wobei jedoch hier auf einen entsprechenden Stempel 15 verzichtet werden kann, um das Baguette 1 aus dem Behälter zu schieben.

Im Rahmen der vorliegenden Erfindung sollen jedoch auch andere möglichen denkbaren Formen eines solchen faltbaren Beutels 6 liegen. Beispielsweise könnte dieser nur einfach L-förmig gefaltet werden.

Auch soll vom vorliegenden Erfindungsgedanken umfaßt sein, daß der Behälter 9, 9.1, 9.2 rund, oval, mehreckartig bis vieleckig ausgebildet ist, um Baguettes od. dgl. auf zunehmen.

| **Positionszahlenliste** | | | | | |
|---|---|---|---|---|---|
| 1 | Brot | 34 | | 67 | |
| 2 | Elemente | 35 | | 68 | |
| 3 | " | 36 | | 69 | |
| 4 | Hälfte | 37 | | 70 | |
| 5 | " | 38 | | 71 | |
| 6 | Beutel | 39 | | 72 | |
| 7 | Lasche | 40 | | 73 | |
| 8 | Belag | 41 | | 74 | |
| 9 | Behälter | 42 | | 75 | |
| 10 | Deckel | 43 | | 76 | |
| 11 | Stirnwände | 44 | | 77 | |
| 12 | Schlitz | 45 | | 78 | |
| 13 | Faltlinie | 46 | | 79 | |
| 14 | Führungsschlitz | 47 | | | |
| 15 | Stempel | 48 | | | |
| 16 | Öffnung | 49 | | | |
| | | 50 | | | |
| X | Pfeilrichtung | 51 | | | |
| | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Aufbringen eines Belages auf ein Brot, insbesondere Baguette, welches in zumindest zwei Hälften aufgeschnitten wird, wobei zwischen die zwei Hälften des Brotes ein mit einem Belag, Aufstrich od. dgl. gefüllter Beutel eingelegt und vor dem Verzehr des Brotes einends zumindest teilweise geöffnet wird, wonach andernends der Beutel ergriffen und aus dem Brot herausgezogen wird, wobei gleichzeitig durch Einschnüren des Beutels der Belag auf das Brot aufgebracht wird.

2. Verfahren nach Anspruch 1, **dadurch gekennzeichnet, dass** der Beutel mittels zwei gegeneinander verspannten Elementen eingeschnürt wird.

3. Verfahren nach Anspruch 1 oder 2, **dadurch gekennzeichnet, dass** der Beutel mittels Finger einer menschlichen Hand zusammengedrückt wird.

4. Verfahren nach wenigstens einem der Ansprüche 1 bis 3, **dadurch gekennzeichnet, dass** der ggfs. pastöse Belag durch das Herausziehen des Beutels gleichmässig verteilt auf das Baguette aufgetragen wird.

5. Verfahren nach wenigstens einem der Ansprüche 1 bis 4, **dadurch gekennzeichnet, dass** das Baguette nach Aufbringen des Belages erhitzt bzw. gebacken wird.

6. Verfahren nach Anspruch 5, **dadurch gekennzeichnet, dass** das erhitzte Baguette in einen Behälter gelegt und dort warmgehalten wird.

7. Verfahren nach Anspruch 1 oder 2, **dadurch gekennzeichnet, dass** das Baguette mit Beutel in einen Behälter gelegt und zumindest ein Ende des Beutels durch einen Schlitz einer Stirnwand des Behälters geführt wird.

8. Verfahren nach Anspruch 7, **dadurch gekennzeichnet, dass** der Beutel durch den Schlitz zusammengedrückt und beim Herausziehen, nach dem Öffnen des Beutels am anderen Ende, der Belag gleichmässig auf das Baguette aufgebracht wird.

9. Verfahren nach Anspruch 8, **dadurch gekennzeichnet, dass** das mit dem Belag versehene Baguette aus dem Behälter entnommen, erhitzt und ggfs. anschliessend wieder in den Behälter gelegt wird.

10. Verfahren nach Anspruch 9, **dadurch gekennzeichnet, dass** der entleerte Beutel zu einem länglichen Schieber, bevorzugt durch U-förmig, gefaltet und anschliessend durch eine entsprechende Öffnung der Stirnwand des Behälters geführt wird.

11. Verfahren nach Anspruch 10, **dadurch gekennzeichnet, dass** durch stirnseitiges Einschieben des gefalteten Beutels in den Behälter das Baguette stirnseitig andernends in beliebiger Länge herausgeschoben wird.

12. Verfahren nach Anspruch 10 oder 11, **dadurch gekennzeichnet, dass** zum erleichterten Herausschieben des Baguettes aus dem Behälter ein mit einem Schlitz versehener Stempel in den Behälter eingesetzt ist, von welchem das Baguette herausgeschoben wird.

13. Vorrichtung zur Durchführung des Verfahrens nach wenigstens einem der Ansprüche 1 bis 12, **dadurch gekennzeichnet, dass** ein Behälter (9) zur Aufnahme des Brotes (1), zwischen dessen zwei Hälften (4, 5) zumindest ein Beutel (6) eingelegt ist, eine Einrichtung (2, 3, 12.1, 16) zum Einschnüren des Beutels (6) aufweist.

14. Vorrichtung nach Anspruch 13, **dadurch gekennzeichnet, dass** einer Wand (11.1, 11.2) des Behälters (9) ein Schlitz (12.1, 12.3) zugeordnet ist, durch welchen jeweils eine Lasche (7.1) des Beutels (6) greift.

15. Vorrichtung nach Anspruch 14, **dadurch gekennzeichnet, dass** der Schlitz (12.1) infinitesimal grösser als eine Dicke des ungefüllten Beutels (6) ausgebildet ist.

16. Vorrichtung nach einem der Ansprüche 13 bis 15, **dadurch gekennzeichnet, dass** der Beutel (6) mit zumindest einer Faltlinie (13) versehen ist.

17. Vorrichtung nach Anspruch 16, **dadurch gekennzeichnet, dass** dem Beutel (6) zwei Faltlinien (13) in Längsrichtung zugeordnet sind, wobei der Beutel (6) U-förmig faltbar ist.

18. Vorrichtung nach wenigstens einem der Ansprüche 14 bis 17, **dadurch gekennzeichnet, dass** dem Schlitz (12.1, 12.3) bevorzugt rechtwinklig zumindest ein Führungsschlitz (14.1, 14.2) zugeordnet ist.

19. Vorrichtung nach Anspruch 18, **dadurch gekennzeichnet, dass** zumindest zwei Führungsschlitze (14.1, 14.2) zueinander beabstandet dem Schlitz (12.1, 12.3) zugeordnet sind, wobei eine U-förmige Öffnung gebildet ist.

20. Vorrichtung nach wenigstens einem der Ansprüche 13 bis 19, **dadurch gekennzeichnet, dass** dem Behälter (9) ein Stempel (15) mit zumindest einer schlitzartigen Öffnung (16) zum Durchführen des Beutels (6), insbesondere dessen Lasche (7.1), zugeordnet ist.

21. Vorrichtung nach Anspruch 20, **dadurch gekennzeichnet, dass** der Stempel (15) durch den gefalteten Beutel (6) in Richtung einer Stirnwand (11.2) verschiebbar im Behälter (9) angeordnet ist.

## Claims

1. Method of applying a filling to a loaf, more especially a baguette, which is cut-up into at least two halves, wherein a bag, which has been filled with a filling, spread or the like, is inserted between the two halves of the loaf and, prior to the consumption of the loaf, is opened at least partially at one end, after which the bag is grasped at the other end and withdrawn from the loaf, the filling being simultaneously applied to the loaf by constricting the bag.

2. Method according to claim 1, **characterised in that** the bag is constricted by means of two elements which are tensioned relative to each other.

3. Method according to claim 1 or 2, **characterised in that** the bag is compressed by means of fingers of a human hand.

4. Method according to at least one of claims 1 to 3, **characterised in that** the filling, which is possibly pasty, is applied to the baguette in a uniformly distributed manner by the withdrawal of the bag.

5. Method according to at least one of claims 1 to 4, **characterised in that** the baguette is heated, or respectively baked, after the application of the filling.

6. Method according to claim 5, **characterised in that** the heated baguette is placed in a container and kept warm there.

7. Method according to claim 1 or 2, **characterised in that** the baguette, together with the bag, is placed in a container, and at least one end of the bag is guided through a slot of an end wall of the container.

8. Method according to claim 7, **characterised in that** the bag is compressed by the slot, and the filling is applied uniformly to the baguette after the bag has been opened at the other end.

9. Method according to claim 8, **characterised in that** the baguette, provided with the filling, is removed from the container, heated and possibly subsequently put back into the container.

10. Method according to claim 9, **characterised in that** the emptied bag is folded, preferably through a "U" shape, to form an elongate slide, and subsequently guided through a corresponding opening in the end wall of the container.

11. Method according to claim 10, **characterised in that**, as a result of the front end of the folded bag being inserted into the container, the baguette is expelled at the other front end in any desirable length.

12. Method according to claim 10 or 11, **characterised in that**, to facilitate the expulsion of the baguette from the container, a plunger provided with a slot is inserted into the container, from which the baguette is expelled.

13. Apparatus for accomplishing the method according to at least one of claims 1 to 12, **characterised in that** a container (9) for accommodating the loaf (1), between the two halves (4, 5) of which at least one bag (6) is inserted, has a device (2, 3, 12.1, 16) for constricting the bag (6).

14. Apparatus according to claim 13, **characterised in that** a slot (12.1, 12.3) is associated with one wall (11.1, 11.2) of the container (9), through which slot a respective tab (7.1) of the bag (6) engages.

15. Apparatus according to claim 14, **characterised in that** the slot (12.1) is configured to be infinitesimally larger than a thickness of the unfilled bag (6).

16. Apparatus according to one of claims 13 to 15, **characterised in that** the bag (6) is provided with at least one fold line (13).

17. Apparatus according to claim 16, **characterised in that** two fold lines (13) are associated with the bag (6) in the longitudinal direction, the bag (6) being foldable in a U-shaped manner.

18. Apparatus according to at least one of claims 14 to 17, **characterised in that** at least one guide slot (14.1, 14.2) is associated preferably at right angles with the slot (12.1, 12.3).

19. Apparatus according to claim 18, **characterised in that** at least two guide slots (14.1, 14.2) are associated with the slot (12.1, 12.3), with a spacing therebetween, a U-shaped opening being formed thereby.

20. Apparatus according to at least one of claims 13 to 19, **characterised in that** a plunger (15), having at least one slot-like opening (16) for guiding the bag (6) therethrough, more especially the tab (7.1) thereof, is associated with the container (9).

21. Apparatus according to claims 20, **characterised in that** the plunger (15) is disposed in the container (9) so as to be displaceable through the folded bag (6) in the direction of an end wall (11.2).

## Revendications

1. Procédé pour appliquer un revêtement sur un pain notamment une baguette coupée en au moins deux moitiés,
selon lequel
on place entre les deux moitiés du pain un sachet muni d'un revêtement, d'une enduction ou d'un remplissage et avant la consommation du pain on ouvre une extrémité de ce sachet au moins en partie puis on prend l'autre extrémité du sachet et on la tire du pain, et en rétrécissant en même temps le sachet on applique le revêtement sur le pain.

2. Procédé selon la revendication 1,
**caractérisé en ce que**
le sachet est rétréci à l'aide de deux éléments serrés l'un contre l'autre.

3. Procédé selon l'une quelconque des revendications 1 ou 2,
**caractérisé en ce que**
le sachet se comprime à l'aide des doigts de la main.

4. Procédé selon l'une quelconque des revendications 1 à 3,
**caractérisé en ce que**
le revêtement, le cas échéant pâteux, est réparti régulièrement par l'extracti du sachet pour être appliqué sur la baguette.

5. Procédé selon l'une quelconque des revendications 1 à 4,
**caractérisé en ce qu'**
après application du revêtement on chauffe ou on cuit la baguette.

6. Procédé selon la revendication 5,
**caractérisé en ce qu'**
on place la baguette chauffée dans un récipient et on la maintient au chaud.

7. Procédé selon l'une quelconque des revendications 1 ou 2,
**caractérisé en ce qu'**
on place la baguette avec le sachet dans un récipient et on fait passer au moins une extrémité du sachet à travers une fente de la paroi frontale du récipient.

8. Procédé selon la revendication 7,
**caractérisé en ce qu'**
on comprime le sachet à travers la fente et lors de l'extraction, après l'ouverture du sachet à l'autre extrémité, on applique le revêtement régulièrement sur la baguette.

9. Procédé selon la revendication 8,
**caractérisé en ce qu'**
on extrait la baguette munie du revêtement du récipient, on la chauffe et le cas échéant on la place ensuite de nouveau dans le récipient.

10. Procédé selon la revendication 9,
**caractérisé en ce qu'**
on plie le sachet vidé formant un tiroir longitudinal de préférence en U, et ensuite on le fait passer par une ouverture correspondante de la paroi frontale du récipient.

11. Procédé selon la revendication 10,
**caractérisé en ce que**
par l'introduction frontale du sachet plié dans le récipient, on extrait la baguette par une face frontale et de l'autre côté on la sort sur une longueur quelconque.

12. Procédé selon l'une quelconque des revendications 10 ou 11,
**caractérisé en ce que**
pour faciliter l'extraction de la baguette du récipient on place dans le récipient un poinçon muni d'une fente d'où on extrait la baguette.

13. Dispositif pour la mise en oeuvre du procédé selon au moins l'une quelconque des revendications 1 à 12,
**caractérisé en ce qu'**
il comporte un récipient (9) pour recevoir le pain (1) entre les deux moitiés duquel (4, 5) on place au moins un sachet (6), ainsi qu'une installation (2, 3, 12.1, 16) pour rétrécir le sachet (6).

14. Dispositif selon la revendication 13,
**caractérisé en ce qu'**
une paroi (11.1, 11.2) du récipient (9) comporte une fente (12.1, 12.3) à travers laquelle passe chaque fois une patte (7.1) du sachet (6).

15. Dispositif selon la revendication 14,
**caractérisé en ce que**
la fente (12.1) est à peine plus grande que l'épaisseur du sachet (6) non rempli.

16. Dispositif selon l'une quelconque des revendications 13 à 15,
**caractérisé en ce que**
le sachet (6) est muni d'au moins une ligne de pliage (13).

17. Dispositif selon la revendication 16,
**caractérisé en ce que**
deux lignes de pliage (13) dans la direction longitudinale sont associées au sachet (6) et le sachet (6) est plié en forme de U.

18. Dispositif selon l'une quelconque des revendications 14 à 17,
**caractérisé par**
au moins une fente de guidage (14.1, 14.2) associée de préférence à angle droit à la fente (12.1, 12.3).

19. Dispositif selon la revendication 18,
**caractérisé par**
au moins deux fentes de guidage (14.1, 14.2) distantes l'une de l'autre de la fente (12.1, 12.3), en formant une ouverture en U.

20. Dispositif selon l'une quelconque des revendications 13 à 19,
**caractérisé en ce qu'**
un poinçon (15) est associé au récipient (9) avec au moins une ouverture (16) en forme de fente pour le passage du sachet (6), en particulier de sa patte (7.1).

21. Dispositif selon la revendication 20,
**caractérisé en ce que**
le poinçon (15) est coulissant dans le récipient (9) dans la direction de la paroi frontale (11.2).
